# EUROPEAN PATENT APPLICATION

(11) **EP 4 796 395 A1**
(43) Date of publication of application: **26.08.2026**
(21) Application number: 26157895.9
(22) Date of filing: 11.02.2026
(51) Int. Cl.: B60T 7/16, B60T 17/22

(54) **SYSTEM, COMMUNICATION DEVICE, AND METHOD**

(30) Priority: 20.02.2025 JP 2025025549
(71) Applicant: Toyota Jidosha Kabushiki Kaisha, Toyota-shi, Aichi-ken 471-8571 (JP)
(72) Inventor: IWAHORI, Kento, Toyota-shi, 471-8571 (JP)
(74) Representative: D Young & Co LLP

(57) **Abstract**

A system (50) for adjusting braking force of a moving object (100) that runs by unmanned driving includes a control device (200) and a braking adjustment unit (132). The control device (200) is provided outside of the moving object (100) and transmits through communication a signal for controlling the unmanned driving to the moving object (100). The braking adjustment unit (132) is installed to the moving object (100) and transmit, to a braking device of the moving object, a control signal for generating an emergency braking force when the communication between the control device (200) and the moving object (100) is impossible. The control signal have a command value. The braking adjustment unit adjusts the command value in accordance with an environment in which the moving object is running.

## Description

### CROSS-REFERENCE TO RELATED APPLICATIONS

This application claims priority to Japanese Patent Application No. 2025-025549 filed on February 20, 2025, which is incorporated herein by reference in its entirety.

### BACKGROUND

### FIELD

The present disclosure relates to a system, a communication device, and a method.

### RELATED ART

Japanese Patent No. 7424535 discloses a technology of causing a vehicle to run by unmanned driving through remote control. The unmanned driving is controlled by transmission of a control signal through communication to the vehicle from a control device provided outside of the vehicle. Generally, such a vehicle is provided with a detection unit that detects whether communication is possible. When the detection unit detects that communication is impossible, the detection unit transmits to a braking device a control signal to cause emergency braking to act, and thereby the vehicle is caused to stop suddenly.

However, when communication between the control device and the vehicle is disabled while the vehicle runs on inspection equipment (for example, a drum tester) including a roller that rotates while supporting a wheel, emergency braking may cause large difference in rotation speed of the wheel and the roller, and the vehicle may fall off the inspection equipment at comparatively high speed. Moreover, when communication between the control device and the vehicle is disabled while the vehicle runs on a frozen road surface, emergency braking may cause slipping of the vehicle. Therefore, braking when communication between the control device and the vehicle is disabled has room for improvement. Note that not only a vehicle but also any moving object may share such a problem. Further, such a problem may occur when a vehicle runs not only inspection equipment or a frozen road surface but also any region where execution of emergency braking is unfavorable.

### SUMMARY

The present disclosure is achievable as the following aspects.

According to one aspect of the present disclosure, a system for adjusting braking force of a moving object that runs by unmanned driving is provided. The system includes a control device and a braking adjustment unit. The control device is provided outside of the moving object and transmits through communication a signal for controlling the unmanned driving to the moving object. The braking adjustment unit is installed to the moving object and transmit, to an actuator of a braking device of the moving object, a control signal for generating an emergency braking force when the communication between the control device and the moving object is impossible. The control signal includes a command value of the emergency braking force. The braking adjustment unit adjusts the command value in accordance with an environment in which the moving object is running.

### BRIEF DESCRIPTION OF THE DRAWINGS

Fig. 1 is a conceptual diagram illustrating a configuration of a system according to a first embodiment;
Fig. 2 is a block diagram illustrating a configuration of a system;
Fig. 3 is a diagram for explaining inspection by inspection equipment;
Fig. 4 is a flowchart illustrating a procedure of running control of a vehicle according to the first embodiment;
Fig. 5 is a flowchart illustrating a procedure of braking force adjustment processing of a vehicle; and
Fig. 6 is a flowchart illustrating a procedure of braking force adjustment processing according to a second embodiment.

### DETAILED DESCRIPTION

### A. First Embodiment:

### <Outline of System 50>

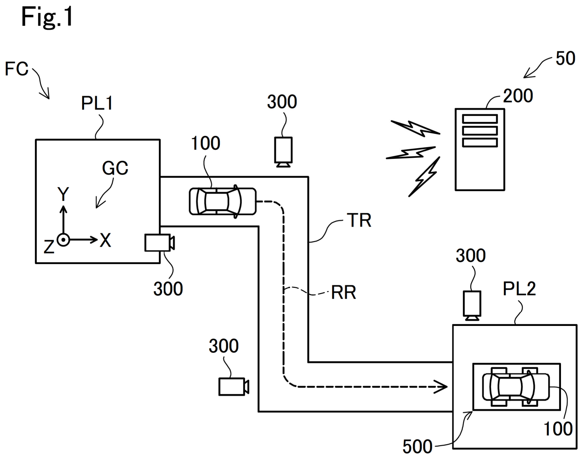

Fig. 1 is a conceptual diagram illustrating a configuration of a system 50 according to a first embodiment. The system 50 is used to cause a vehicle 100 as a moving object to run by unmanned driving. In addition, the system 50 is used to increase and adjust braking force of the vehicle 100 when communication between the vehicle 100 running by unmanned driving and a server 200 is disabled.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

In this embodiment, the vehicle 100 is capable of driving unmanned. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In this embodiment, the system 50 is used in a factory FC where the vehicle 100 is produced. In the present embodiment, the reference coordinate system of the factory FC is a global coordinate system GC and a location in the factory can be expressed by X, Y, and Z coordinates in the global coordinate system GC. The factory FC includes a first place PL1 and a second place PL2. The first place PL1 and the second place PL2 are connected to one another through a track TR on which the vehicle 100 is capable of driving. The vehicle 100 moves from the first place PL1 to the second place PL2 through the track TR by unmanned driving. At the first place PL1 and the second place PL2, assembling for production of the vehicle 100 and various types of inspection are performed.

Inspection equipment 500 is provided to the second place PL2. The vehicle 100 that has moved to the second place PL2 moves onto the inspection equipment 500 by unmanned driving and undergoes inspection. In this embodiment, the inspection equipment 500 is used to inspect a speedometer. Details of the inspection equipment 500 will be described later.

### <Configuration of System 50>

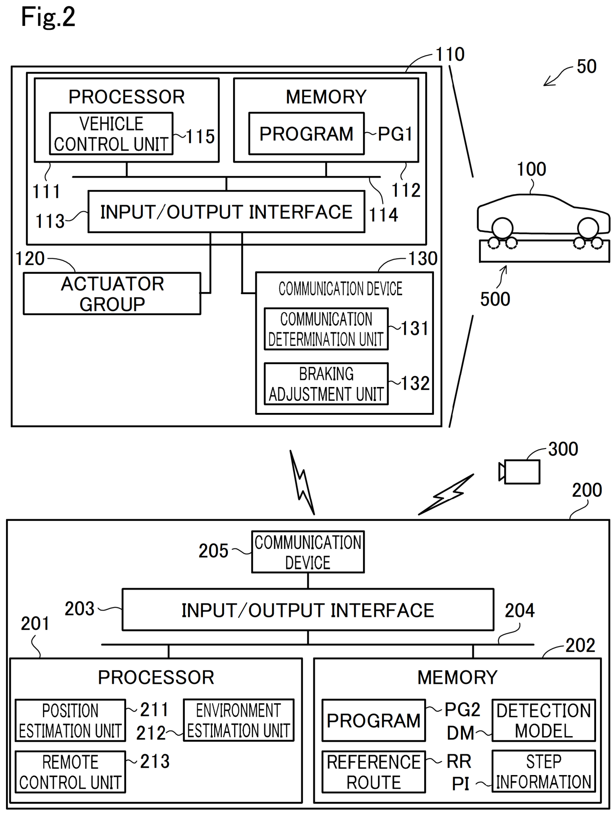

Fig. 2 is a block diagram illustrating a configuration of the system 50. The system 50 includes a sensor 300, the server 200, and the vehicle 100.

### <Configuration of Sensor 300>

A plurality of sensors 300 is provided to the first place PL1, the second place PL2, and the track TR illustrated in Fig. 1. The sensor 300 is a sensor located outside the vehicle 100. The sensor 300 captures the vehicle 100 from an outside of the vehicle 100. For example, the sensor 300 includes a camera. The sensor 300 includes a communication device (not illustrated) and can communicate with another device, such as the server 200, by wired or wireless communication.

### <Configuration of Server 200>

As illustrated in Fig. 2, the server 200 is provided outside of the vehicle 100. The server 200 is an example of a "control device" according to the present disclosure. The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices outside of the server 200 is coupled to the input/output interface 203. The communication device 205 can communicate with external devices including the vehicle 100 and the sensor 300 by wireless communication. The memory 202 stores various kinds of information including a program PG2 and step information SI. The processor 201 executes the program PG2 stored in the memory 202, thus implementing various functions including functions of a position estimation unit 211, an environment estimation unit 212, and a remote control unit 213.

The position estimation unit 211 estimates a position of the vehicle 100. Position estimation is performed by acquiring vehicle location information using the detection result output from the sensor 300. The vehicle location information is locational information as a basis for generating a running control signal. In the present embodiment, the vehicle location information includes the location and orientation of the vehicle 100 in the global coordinate system GC of the factory FC. Specifically, the processor 201 acquires the vehicle location information using the captured image acquired from the camera as the sensor 300.

More specifically, the position estimation unit 211 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. A detection model DM is prepared, for example, in the system 50 or outside of the system 50 and is stored in the memory 202 of the server 200 in advance. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example. The position of the vehicle 100 estimated in this manner is used in processing performed by the environment estimation unit 212 and the remote control unit 213 described later.

The environment estimation unit 212 estimates an environment in which the vehicle 100 is running. In this embodiment, the environment includes information on a place at which the vehicle 100 is running. In this embodiment, the environment is estimated by using the estimated position of the vehicle 100 and the step information SI. The step information SI is a table in which the position of the vehicle 100 and a type of a step performed to the vehicle 100 are associated with one another. For example, as the step information SI, coordinates in the second place PL2 illustrated in Fig. 1 and inspection of the speedometer are stored in such a manner as to be associated with one another. When the position estimation unit 211 estimates that the position of the vehicle 100 corresponds to the coordinates in the second place PL2, the environment estimation unit 212 estimates that the environment in which the vehicle 100 is running is on the speedometer inspection equipment 500. The estimated environment is transmitted to the vehicle 100. More specifically, the estimated environment is transmitted to a communication device 130 described later and stored in a memory included in the communication device 130.

The remote control unit 213 transmits through communication a running control signal for controlling an actuator group 120 described later to the vehicle 100, thereby controlling unmanned driving of the vehicle 100. The remote control unit 213 uses a detection result of the sensor 300 and the position of the vehicle 100 estimated by the position estimation unit 211 to generate the running control signal. The remote control unit 213 may generate and output not only the running control signal but also control signals to control, for example, actuators that operate various auxiliary machines and various types of equipment including a wiper, a power window, and a light provided to the vehicle 100. That is, the remote control unit 213 may operate various types of equipment and various auxiliary machines installed to the vehicle 100 by remote control.

### <Configuration of Vehicle 100>

The vehicle 100 includes a vehicle control device 110 to control each unit of the vehicle 100, the actuator group 120 including one or more actuators that perform driving under control of the vehicle control device 110, and the communication device 130 to communicate with an external device, such as the server 200, by wireless communication. The actuator group 120 includes an actuator of a driving device for accelerating the vehicle 100, an actuator of a steering device for changing a traveling direction of the vehicle 100, and an actuator of a braking device for decelerating the vehicle 100.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120 and the communication device 130 are coupled to the input/output interface 113. The processor 111 executes a program PG1 stored in the memory 112, thus implementing various functions including a function as a vehicle control unit 115.

The vehicle control unit 115 uses the running control signal received from the server 200 to control the actuator group 120, thereby causing the vehicle 100 to run. The running control signal is a control signal to cause the vehicle 100 to run. The running control signal includes an acceleration and a steering angle of the vehicle 100 as parameters. In other embodiments, the running control signal may include the speed of the vehicle 100 as a parameter instead of or in addition to the acceleration of the vehicle 100.

The communication device 130 performs wired or wireless communication between the vehicle 100, and the server 200 and the sensor 300. The communication device 131 transmits control signals received from the server 200 to the vehicle 100. The communication device 131 transmits the detection results received from the sensor 300 to the vehicle 100. Further, the communication device 130 determines whether communication is possible and adjusts a command value of braking force when communication is impossible. The communication device 130 includes a computer including a processor and the memory. The processor of the communication device 130 executes a program stored in the memory, thus implementing various functions including a communication determination unit 131 and a braking adjustment unit 132.

The communication determination unit 131 determines whether communication between the server 200 and the vehicle 100 is possible. The communication determination unit 131 determines that communication is impossible when, for example, the server 200 and the vehicle 100 cannot communicate with one another for a predetermined period or longer. Such determination is executable through, for example, comparison between a timestamp included in a latest signal transmitted from the server 200 and current time. The method for determining whether communication is possible is not limited to the above-described method, but any known method may be used.

When communication between the server 200 and the vehicle 100 is impossible, the braking adjustment unit 132 increases an emergency braking force of the vehicle 100. Specifically, when the communication determination unit 131 determines that the communication is impossible, the braking adjustment unit 132 transmits, to the braking device, a control signal for generating the emergency braking force. Accordingly, the braking device operates the actuator to generate emergency braking force, the vehicle 100 is caused to decelerate or stop. Note that, the emergency braking force is the braking force used to decelerate or stop a vehicle when communication between the server 200 and the vehicle 100 is impossible. The control signal includes a command value. The command value is a target value for applying the emergency braking force to the vehicle 100. The braking adjustment unit 132 may transmit the control signal to the braking device via other control device or communication device. That is, the braking adjustment unit 132 may transmit the control signal to the brake device either directly or indirectly.

The braking adjustment unit 132 adjusts the command value of the emergency braking force in accordance with an environment in which the vehicle 100 is running. Specifically, when the vehicle 100 is running in an environment in which acting of comparatively large emergency braking force is unfavorable, the braking adjustment unit 132 transmits, to the actuator of the braking device, a command value to cause comparatively small braking to act. Such the environment is, for example, on the inspection equipment 500. The environment in which the vehicle 100 is running is estimated by the environment estimation unit 212 described above and is stored in the memory of the communication device 130. In this embodiment, when the environment in which the vehicle 100 is running is on the inspection equipment 500, the braking adjustment unit 132 transmits, to the braking device, a command value to cause reduced emergency braking force to act as compared with a case in which the environment where the vehicle 100 is running is other than the inspection equipment 500. In other words, the braking adjustment unit 132 transmits, to the braking device, a command value so that negative acceleration of the vehicle 100 is reduced. For example, the braking adjustment unit 132 transmits, to the braking device, the command value that is limited so that the maximum braking force becomes smaller. Details of the adjustment of the emergency braking force on the inspection equipment 500 will be described later.

Note that when communication between the server 200 and the vehicle 100 is disabled while the vehicle 100 runs in the environment other than in which acting of comparatively large emergency braking force is unfavorable, the braking adjustment unit 132 does not perform the processing to reduce the emergency braking force as described above, but causes emergency braking force without reduction to act so as to promptly decelerate or stop the vehicle 100.

### <Configuration of Inspection Equipment 500>

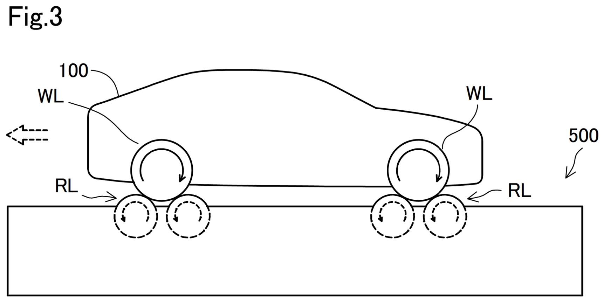

Fig. 3 is a diagram for explaining inspection by the inspection equipment 500. The inspection equipment 500 uses a roller RL to inspect the speedometer of the vehicle 100. The inspection equipment 500 is also referred to as a drum tester. The inspection equipment 500 includes a plurality of rollers RL.

Each of the plurality of rollers RL is embedded in a road surface in such a manner as to be partly exposed. Each roller RL is rotatable while supporting a wheel WL of the vehicle 100. Each roller RL has a rotation axis in a left-right direction of the vehicle 100. Each roller RL is made of metal. In this embodiment, one wheel WL is supported in such a manner as to be sandwiched between two rollers RL arranged in a front-rear direction of the vehicle 100. In a case in which the vehicle 100 is a four-wheeled vehicle, one inspection equipment 500 includes eight rollers RL. The respective rollers RL have configurations similar to one another. Each roller RL rotates in response to rotation of the wheel WL. Accordingly, the vehicle 100 supported by the plurality of rollers RL can rotate the wheels WL without moving in the front-rear direction. Note that, each wheel WL may be supported by a single roller RL.

The inspection equipment 500 uses circumferential speed of the roller RL to calculate speed of the vehicle 100 and output the calculated speed of the vehicle 100. The speed output by the inspection equipment 500 and speed displayed on the speedometer of the vehicle 100 are compared to one another, and thus the speedometer is inspected.

In Fig. 3, the wheel WL rotates in a direction in which the vehicle 100 runs forward. At this time, the roller RL rotates in an opposite direction to the rotation direction of the wheel WL. When braking force is applied to the vehicle 100 in this state, the circumferential speed of the roller RL becomes higher than circumferential speed of the wheel WL. This causes the vehicle 100 to fall off the inspection equipment 500 in a direction indicated by a broken arrow. The speed of the vehicle 100 when falling off the inspection equipment 500 depends on relative speed between the wheel WL and the roller RL. That is, when comparatively large braking force acts on the vehicle 100, the vehicle 100 may fall off the inspection equipment 500 at comparatively high speed. When the vehicle 100 falls at comparatively high speed, time required for stopping may increase. Thereby, it is desirable for the vehicle 100 to fall off at comparatively low speed.

### <Running Control of Vehicle 100>

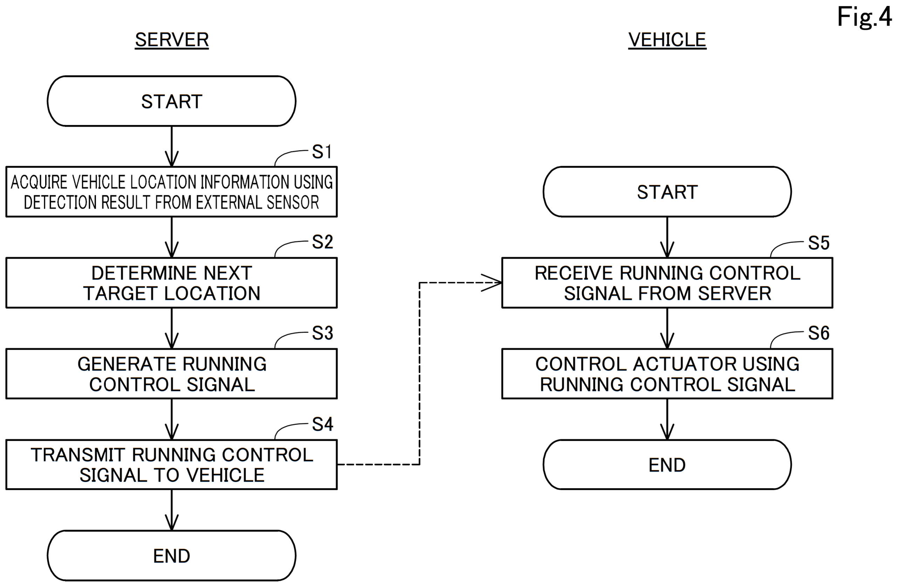

FIG. 4 is a flowchart showing a processing procedure for running control of the vehicle 100 in the first embodiment. This procedure is executed to cause the vehicle 100 to run by unmanned driving. In the procedure in Fig. 4, the processor 201 of the server 200 executes the program PG2, thus functioning as the remote control unit 213. Moreover, the processor 111 of the vehicle 100 executes the program PG1, thus functioning as the vehicle control unit 115.

In step S1, the position estimation unit 211 acquires vehicle location information using the detection result output from the sensor 300.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

### < Emergency Braking Force Adjustment Processing of Vehicle 100>

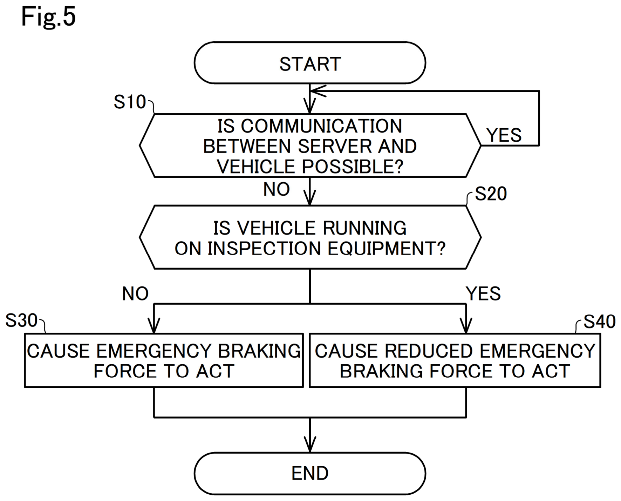

Fig. 5 is a flowchart illustrating a procedure of emergency braking force adjustment processing of the vehicle 100. The adjustment processing is performed to decelerate or stop the vehicle 100 when communication between the server 200 and the vehicle 100 is disabled on the inspection equipment 500 illustrated in Fig. 3. Further, the adjustment processing is performed to suppress the vehicle 100 falling off the inspection equipment 500 at comparatively high speed due to acting of comparatively large emergency braking force when the vehicle 100 is running on the inspection equipment 500. The adjustment processing is executed as unmanned driving of the vehicle 100 starts.

As illustrated in Fig. 5, at Step S10, the communication determination unit 131 of the communication device 130 determines whether the server 200 and the vehicle 100 can communicate with one another. If communication between the server 200 and the vehicle 100 is impossible (Step S10: YES), the determination at Step S10 is performed again.

If communication between the server 200 and the vehicle 100 is impossible (Step S10: NO), at Step S20, the braking adjustment unit 132 determines whether the vehicle 100 is running on the inspection equipment 500. The determination is performed by using a latest environment estimated and transmitted by the environment estimation unit 212.

If it is determined that the vehicle 100 is not running on the inspection equipment 500 (Step S20: NO), at Step S30, in order to decelerate or stop the vehicle 100, the braking adjustment unit 132 transmits to the actuator group 120 a control signal to cause emergency braking force to act. It can be said that, at Step S30, a control signal to cause emergency braking force larger than emergency braking force at Step S40 described later to act is transmitted.

If it is determined that the vehicle 100 is running on the inspection equipment 500 (Step S20: YES), at Step S40, in order to decelerate or stop the vehicle 100, the braking adjustment unit 132 transmits, to the braking device, a control signal to cause reduced emergency braking force to act as compared with the case in which the vehicle 100 is running a place other than on the inspection equipment 500 at the same speed. At Step S40, the braking adjustment unit 132 transmits command value smaller than command value at Step S30. It can be said that, at Step S40, slow braking operation is executed as compared with Step S30. "Slow braking operation" means braking operation with smaller change in speed per unit time.

According to the system 50 of the first embodiment described above, when communication between the server 200 and the vehicle 100 is impossible, the braking adjustment unit 132 transmit, to a braking device of the vehicle 100, a control signal for generating an emergency braking force to decelerate or stop the vehicle 100. The signal includes a command value of the emergency braking force. The braking adjustment unit 132 adjusts the command value in accordance with the environment in which the vehicle 100 is running. Therefore, setting command value suitable for the environment can improve stopping of the vehicle 100.

Moreover, according to the system 50 of the first embodiment, the braking adjustment unit 132 reduces command value when the vehicle 100 is running on the inspection equipment 500 including the roller RL, as compared with the case in which the vehicle 100 is running a place other than on the inspection equipment 500 at the same speed. Therefore, the vehicle 100 falling off the inspection equipment 500 at comparatively high speed can be suppressed. Specifically, application of reduced emergency braking force to the vehicle 100 can reduce relative speed between the wheel WL and the roller RL illustrated in Fig. 4. Accordingly, the vehicle 100 can fall off the inspection equipment 500 at comparatively low speed. Further, when the vehicle 100 is running a place other than on the inspection equipment 500, comparatively large emergency braking force is applied. Therefore, the vehicle 100 can be caused to stop at a comparatively early timing.

Moreover, according to the system 50 of the first embodiment, the communication device 130 implements the functions of the communication determination unit 131 and the braking adjustment unit 132. Therefore, as compared with a case in which the processor 111 of the vehicle 100 implements the functions of the communication determination unit 131 and the braking adjustment unit 132, transmission of a signal when communication between the server 200 and the vehicle 100 is disabled can be executed at an early timing. Accordingly, the vehicle 100 can be caused to stop at an earlier timing.

### B. Second Embodiment:

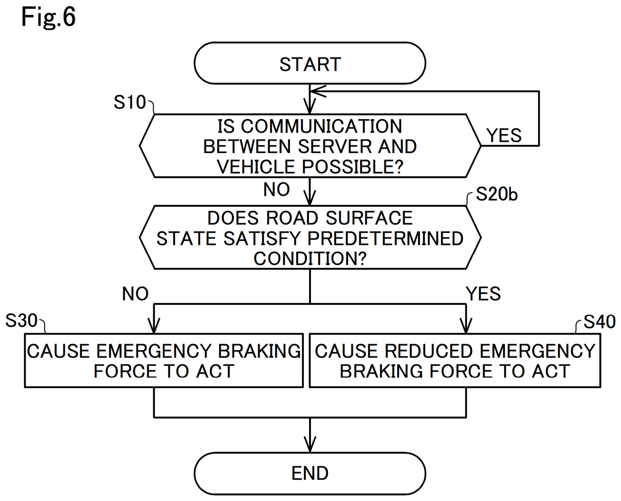

Fig. 6 is a flowchart illustrating a procedure of emergency braking force adjustment processing according to a second embodiment. In the system 50 of the first embodiment, emergency braking force is reduced when the vehicle 100 is running on the inspection equipment 500. However, in the system 50 of the second embodiment, emergency braking force is reduced when a state of a road surface on which the vehicle 100 is running satisfies a predetermined condition. The adjustment processing of the second embodiment illustrated in Fig. 6 is different from the adjustment processing of the first embodiment illustrated in Fig. 5 in that the adjustment processing of the second embodiment executes processing of Step S20b instead of the processing of Step S20. In the system 50 and the adjustment processing of the second embodiment, configurations and processing not described below are similar to those of the system 50 and the adjustment processing of the first embodiment.

The environment estimated by the environment estimation unit 212 of the second embodiment includes the state of the road surface on which the vehicle 100 is running. The state of the road surface includes states in which the road surface is dry, is frozen, is wet, and is inclined. The state of the road surface is estimated by using information detected by the sensor 300. The state of the road surface may be estimated by using road surface information stored in the memory 202 in advance. The road surface information is a table in which position information and the state of the road surface are associated with one another. For example, in a case in which a road surface at the first place PL1 illustrated in Fig. 1 is frozen, coordinates in the first place PL1 and the road surface being frozen are associated with one another and stored in the memory 202. When the position estimation unit 211 estimates that the vehicle 100 is located at the first place PL1, the environment estimation unit 212 estimates that the road surface on which the vehicle 100 is running is frozen.

When the state of the road surface estimated by the environment estimation unit 212 satisfies the predetermined condition, the braking adjustment unit 132 of the second embodiment reduces emergency braking force as compared with a case in which the state of the road surface does not satisfy the predetermined condition. The predetermined condition includes a state of the road surface in which acting of emergency braking is unfavorable. The predetermined condition in this embodiment includes at least one of the road surface being frozen, being wet, and being inclined. The predetermined condition is stored in the memory of the communication device 130 in advance.

### <Adjustment Processing in Second Embodiment>

As illustrated in Fig. 6, at Step S20b, the braking adjustment unit 132 determines whether the state of the road surface estimated by the environment estimation unit 212 satisfies the predetermined condition. If the state of the road surface does not satisfy the predetermined condition (Step S20b: NO), the processing at Step S30 is executed. If the state of the road surface satisfies the predetermined condition (Step S20b: YES), the processing at Step S40 is executed.

According to the system 50 of the second embodiment described above, when the state of the road surface on which the vehicle 100 is running satisfies the predetermined condition, the braking adjustment unit 132 reduces the command value as compared with the case in which the state of the road surface does not satisfy the predetermined condition. Therefore, setting the state of the road surface in which acting of comparatively large emergency braking force is unfavorable as the predetermined condition can improve the vehicle 100 running on the road surface. Moreover, when the vehicle 100 is running on the road surface that does not satisfy the predetermined condition, comparatively large emergency braking force is applicable, and thus the vehicle 100 can be caused to stop at a comparatively early timing.

Moreover, according to the system 50 of the second embodiment, the predetermined condition includes at least one of the road surface being frozen, being wet, and being inclined. Therefore, stopping of the vehicle 100 running on such a road surface can be improved. Specifically, in the case in which the predetermined condition includes at least one of the road surface being frozen and being wet, slipping of the vehicle 100 due to comparatively large emergency braking force can be suppressed. Further, in the case in which the predetermined condition includes the road surface being inclined, it can be suppressed that the vehicle 100 is depressed with respect to the road surface due to comparatively large emergency braking force and a bottom portion of the vehicle 100 and the road surface contact one another to damage the vehicle 100.

### C. Another Embodiment 1:

(C1) In each of the embodiments described above, the functions of the communication determination unit 131 and the braking adjustment unit 132 are implemented by the processor of the communication device 130. However, the present disclosure is not limited to this. At least one of the functions of the communication determination unit 131 and the braking adjustment unit 132 may be implemented by the processor 111 of the vehicle control device 110. Moreover, at least one of the functions of the communication determination unit 131 and the braking adjustment unit 132 may be implemented by a processor installed to the vehicle 100 and included in any device other than the vehicle control device 110.

(C2) In each of the embodiments described above, the functions of the position estimation unit 211 and the environment estimation unit 212 are implemented by the processor 201 of the server 200. However, the present disclosure is not limited to this. At least one of the functions of the position estimation unit 211 and the environment estimation unit 212 may be implemented by the processor 111 of the vehicle control device 110. At least one of the functions of the position estimation unit 211 and the environment estimation unit 212 may be implemented by a processor installed to the vehicle 100 and included in any device other than the vehicle control device 110.

(C3) In the first embodiment, the environment estimation unit 212 uses the estimated position of the vehicle 100 and the step information SI to estimate the environment. However, the present disclosure is not limited to this. The environment estimation unit 212 may employ any method to estimate the environment. For example, the environment estimation unit 212 may use the position of the vehicle 100 and map information to estimate the environment. Further, in the second embodiment, the environment estimation unit 212 uses the road surface information to estimate the state of the road surface. However, the present disclosure is not limited to this. The environment estimation unit 212 may employ any method to estimate the state of the road surface.

(C4) In each of the embodiments described above, the system 50 is used in the factory FC. However, the present disclosure is not limited to this. The system 50 may be used at any place other than the factory FC.

(C5) In each of the embodiments described above, each of the memories 112 and 202 and the memory included in the communication device 130 may be any storage device. Examples of such a storage device include an HDD (hard disc drive), an SSD (solid state drive), and a DRAM (dynamic random access memory). In each embodiment described above, any control device including a processor and a memory may be used instead of the server 200.

**(C6)** In each of the embodiments described above, the braking adjustment unit 132 may adjust the command value using a table that maps the upper limit of emergency braking force to the vehicle's driving environment. The table is stored in the memory 202 beforehand. In that table, the upper limit of the emergency braking force corresponding to the vehicle's driving environment being on the inspection equipment 500 may be smaller compared to when the vehicle's driving environment is not on the inspection equipment 500. Furthermore, in that table, the upper limit of the emergency braking force corresponding to an environment where the road surface condition meets a predetermined condition may be smaller compared to an environment where the road surface condition does not meet the condition. The braking adjustment unit 132 uses the table to transmit , to the braking device, a command value that does not exceed the upper limit of the emergency braking force.

### D. Another Embodiment 2:

(D1) In each of the above-described embodiments, the sensor 300 is not limited to the camera but may be the distance measuring device, for example. The distance measuring device is a light detection and ranging (LiDAR) device, for example. In this case, the detection result output by the sensor 300 may be three-dimensional point cloud data indicating the vehicle 100. In this case, the server 200 and the vehicle 100 may acquire the vehicle position information through template matching by using the three-dimensional point cloud data as the detection result and reference point cloud data prepared in advance.

(D2) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor installed to the vehicle 100. The internal sensor may include, for example, a sensor that detects a motion state of the vehicle 100, a sensor that detects an operation state of each unit of the vehicle 100, and a sensor that detects surrounding environment of the vehicle 100. Specifically, the internal sensor may include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D3) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(D4) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle controller 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D5) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D6) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(D7) In each of the embodiments described above, some or all of the functions and processing implemented in the form of software may be implemented in the form of hardware. Further, some or all of the functions and processing implemented in the form of hardware may be implemented in the form of software. For example, various types of circuits, such as an integrated circuit and a discrete circuit, may be used as hardware for implementing various functions in each embodiment described above.

The present disclosure is not limited to the embodiments described above but can be implemented in a variety of configurations without departing from the spirit of the present disclosure. For example, in order to solve some or all of the problems described above or to achieve some or all of the effects described above, the technical features of the embodiments can be substituted or combined as appropriate. In addition, unless the technical feature is explained herein as being essential, it can be eliminated as appropriate. For example, the present disclosure may be implemented by embodiments described below.
(1) According to one embodiment of the present disclosure, a system for adjusting braking force of a moving object that runs by unmanned driving is provided. The system includes a control device and a braking adjustment unit. The control device is provided outside of the moving object and transmits through communication a signal for controlling the unmanned driving to the moving object. The braking adjustment unit is installed to the moving object and transmits, to a braking device of the moving object, a control signal for generating an emergency braking force when the communication between the control device and the moving object is impossible. The control signal includes a command value of the emergency braking force. The braking adjustment unit adjusts the command value in accordance with an environment in which the moving object is running.
   According to this system, when communication between the control device and the moving object is impossible, the braking adjustment unit transmits, to the braking device of the moving object, the control signal for generating the emergency braking force and adjusts the command value in accordance with the environment in which the moving object is running. Therefore, setting command value suitable for the environment can improve stopping of the moving object.
(2) In the system of the embodiment described above, the environment may include a place at which the moving object is running. The braking adjustment unit may reduce the command value when the moving object is running on inspection equipment, as compared with a case in which the moving object is running a place other than on the inspection equipment at a same speed. The inspection equipment may include a roller rotatable while the roller supports a wheel of the moving object and execute inspection of the moving object by using the roller.
   According to the system of this embodiment, the braking adjustment unit reduces command value when the moving object is running on inspection equipment, as compared with the case in which the moving object is running a place other than on the inspection equipment at the same speed. Therefore, the moving object falling off the inspection equipment at comparatively high speed can be suppressed. Further, when the moving object is running a place other than on the inspection equipment, comparatively large emergency braking force is applicable. Therefore, the moving object can be caused to stop at a comparatively early timing.
(3) In the system of the embodiment described above, the environment may include a state of a road surface on which the moving object is running. When the state satisfies a predetermined condition, the braking adjustment unit may reduce the command value as compared with a case in which the state does not satisfy the predetermined condition.
   According to the system of this embodiment, when the state of the road surface on which the moving object is running satisfies the predetermined condition, the braking adjustment unit reduces the command value as compared with the case in which the state of the road surface does not satisfy the predetermined condition. Therefore, setting the state of the road surface in which acting of comparatively large emergency braking force is unfavorable as the predetermined condition can improve stopping of the moving object running on the road surface. Moreover, when the moving object is running on the road surface that does not satisfy the predetermined condition, comparatively large emergency braking force is applicable, and thus the moving object can be caused to stop at a comparatively early timing.
(4) In the system of the embodiment described above, the predetermined condition may include at least one of the road surface being frozen, being wet, and being inclined.

According to the system of this embodiment, the predetermined condition includes at least one of the road surface being frozen, being wet, and being inclined. Therefore, stopping of the moving object running on such a road surface can be improved. Specifically, in the case in which the predetermined condition includes at least one of the road surface being frozen and being wet, slipping of the moving object due to comparatively large braking force can be suppressed. Further, in the case in which the predetermined condition includes the road surface being inclined, it can be suppressed that the moving object is depressed with respect to the road surface due to comparatively large braking force and a bottom portion of the moving object and the road surface contact one another to damage the moving object.

The present disclosure can be implemented in aspects other than the aspect as the system described above. Examples of the aspects include a communication device, a vehicle, a device that adjusts braking force, a method for adjusting braking force, a program to implement the method, and a program product including the program. The program product may be, for example, a non-transitory recording medium recording a program, or intangible software distributable over a network.

## Claims

1. A system (50) for adjusting braking force of a moving object (100) that runs by unmanned driving, the system comprising:
a control device (200) provided outside of the moving object and configured to transmit through communication a signal for controlling the unmanned driving to the moving object; and
a braking adjustment unit (132) installed to the moving object and configured to transmit, to a braking device of the moving object, a control signal for generating an emergency braking force when the communication between the control device and the moving object is impossible, wherein
the control signal including a command value of the emergency braking force, and
the braking adjustment unit adjusting the command value in accordance with an environment in which the moving object is running.

2. The system according to claim 1, wherein the environment comprises a place at which the moving object is running, and
the braking adjustment unit is configured to reduce the command value when the moving object is running on inspection equipment (500), as compared with a case in which the moving object is running a place other than on the inspection equipment at a same speed, wherein
the inspection equipment comprising a roller (RL) rotatable while the roller supports a wheel (WL) of the moving object and being configured to execute inspection of the moving object by using the roller.

3. The system according to claim 1, wherein the environment comprises a state of a road surface on which the moving object is running, and
when the state satisfies a predetermined condition, the braking adjustment unit is configured to reduce the command value as compared with a case in which the state does not satisfy the predetermined condition.

4. The system according to claim 3, wherein the predetermined condition comprises at least one of the road surface being frozen, being wet, and being inclined.

5. A communication device (130) installed to a moving object that runs by unmanned driving, the communication device being configured to:
receive through communication a signal for controlling the unmanned driving from a control device provided outside of the moving object;
transmit to the moving object the signal when the communication is possible,
transmit, to a braking device of the moving object, a control signal for generating an emergency braking force when the communication is impossible, wherein the control signal including a command value of the emergency braking force; and
adjust the command value in accordance with an environment in which the moving object is running.

6. A method for adjusting braking force of a moving object that runs by unmanned driving, the method comprising:
transmitting, to a braking device of the moving object, a control signal for generating an emergency braking force when a signal for controlling the unmanned driving is not transmitted to the moving object, wherein the control signal including a command value of the emergency braking force; and
adjusting the command value in accordance with an environment in which the moving object is running.
